# EUROPÄISCHE PATENTANMELDUNG

(11) **EP 2 450 181 A1**
(43) Veröffentlichungstag der Anmeldung: **09.05.2012**
(21) Anmeldenummer: 10014364.3
(22) Anmeldetag: 08.11.2010
(51) Int. Cl.: B32B 3/18, E04C 2/36, B32B 37/12

(54) **Sandwichplatte mit einlaminiertem Querträger und Verfahren zu ihrer Herstellung**

(71) Anmelder: Deutsche Composite GmbH, 22041 Hamburg (DE)
(72) Erfinder: Biessler, Dietmar, 20149 Hamburg (DE)
(74) Vertreter: Sasse, Stefan

(57) **Zusammenfassung**

Erfindungsgemäß ist ein Verfahren zum Herstellen einer Sandwichplatte aus mindestens einer zu laminierenden Deckschicht (26,28) und mindestens einem Kernschicht-Materialblock (8,10,12,14) und mindestens einem Querträger (16,4,18) mit einer laminierten Querträger-Schicht, mit dem Schritt:
● Anordnen eines Kernschicht-Materialblocks und eines Querträgers so, dass eine Oberfläche des Kernschicht-Materialblocks und eine Kante des Querträgers eine gemeinsam laminierbare Fläche für die zu laminierende Deckschicht bilden und dass die Querträger-Schicht in einem Winkel zu der laminierbaren Fläche liegt, dadurch gekennzeichnet, dass das Anordnen so erfolgt, dass mindestens in einem Bereich, wo die Kante der Querträger-Schicht in der laminierbaren Fläche liegt, ein Zwischenraum (30) zwischen dem Kernschicht-Materialblock und der Querträger-Schicht bleibt, und durch den nachfolgenden Schritt:
● Laminieren der laminierbaren Fläche so, dass Harz in dem Zwischenraum eine Verbindung zwischen der Querträger-Schicht und der zu laminierenden Deckschicht herstellt.

## Beschreibung

Die vorliegende Erfindung betrifft ein Verfahren zum Herstellen einer Sandwichplatte aus mindestens einer zu laminierenden Deckschicht und mindestens einem Kernschicht-Materialblock und mindestens einem Querträger mit einer laminierten Querträger-Schicht, mit dem Schritt: Anordnen eines Kernschicht-Materialblocks und eines Querträgers so, dass eine Oberfläche des Kernschicht-Materialblocks und eine Kante des Querträgers eine gemeinsam laminierbare Fläche für die zu laminierende Deckschicht bilden und dass die Querträger-Schicht in einem Winkel zu der laminierbaren Fläche liegt sowie eine Sandwichplatte aus mindestens einer laminierten Deckschicht und mindestens einem Kernschicht-Materialblock und mindestens einem Querträger aus mindestens einer laminierten Querträger-Schicht, wobei die laminierte Deckschicht auf einer gemeinsam laminierbaren Fläche laminiert ist, die von einer Oberfläche des Kernschicht-Materialblocks und einer Kante der Querträger-Schicht gebildet ist, und die Querträger-Schicht in einem Winkel zu der laminierten Deckschicht liegt.

Sandwichplatten sind weit verbreitetes Bau- und Konstruktionsmaterial. Begrifflich fassen sie Flachmaterial zusammen, dass aus mindestens zwei Schichten besteht.

Weit verbreitet sind Sandwichplatten aus einer verhältnismäßig voluminösen Kernschicht mit jeweils einer Deckschicht auf den beiden Seiten der Kernschicht. Um zum Beispiel einer Sandwichplatte sowohl thermisch dämmende als auch mechanisch tragende Eigenschaften zu verleihen, ist eine typische Sandwichplatte aus einer Kernschicht aus leichtem, formstabilen Kunststorfschaum und beidseitigen Deckschichten zum Beispiel aus GfK- oder CfK-Laminat aufgebaut. Glasfaserverstärkter Kunststoff (GfK) und kohlefaserverstärkter Kunststoff (CfK) bestehen bekanntlich aus Glas- beziehungsweise Kohlefaser-Gewebematten (als Faserverstärkung), die auf die zu laminierende Oberfläche (hier den einen Kernschichtmaterialblock aus dem Kunststoffschaum) in einer oder mehreren Lagen übereinander gelegt und mit Kunststoff, zum Beispiel Epoxid- oder Polyester-Harz mit Härter, vorzugsweise einschließlich Flammschutz durchtränkt (bestrichen und/oder übergossen) werden (als sogenannte Matrix).

Der vorliegenden Erfindung liegt die Aufgabe zu Grunde, eine Sandwichplatte zu schaffen, die noch verbesserte Steifigkeits- und restigkeitseigenschaft aufweist.

Diese Aufgabe wird erfindungsgemäß mittels eines Verfahrens mit den Merkmalen des Anspruchs 1 gelöst sowie durch eine Sandwichplatte mit den Merkmalen von Anspruch 7. Bevorzugte Ausgestaltungen sind in den jeweiligen Unteransprüchen angegeben.

Im erfindungsgemäßen Verfahren wird eine Sandwichplatte aus mindestens einem Kernschicht-Muterialblock und mindestens einer Deckschicht zum Beispiel aus GfK- oder CfK-Laminat hergestellt, die auf den Materialblock laminiert wird. Erfindungsgemäß umfasst das Verfahren den Schritt, mindestens einen Kernschicht-Materialblock sowie einen Querträger mit einer laminierten Querträger-Schicht so anzuordnen, dass eine Oberfläche des Kcmschicht-Matcrialblocks und eine Kante des Querträgers in einer Fläche liegen, die gemeinsam laminierbar ist ("eine gemeinsam laminierbare Fläche für die zu laminierende Deckschicht bilden"). Der Querträger liegt dabei in einem Winkel zu der laminierbaren Fläche - also nicht planparallel zu ihr. Der Kernschicht-Materialblock und der Querträger werden dabei so angeordnet, dass zwischen dem Querträger und dem Kernschicht-Materialblock (die die gemeinsam laminierbare Fläche für dic zu laminicrende Deckschicht bilden) ein Zwischenraum bleibt - und zwar dort, wo der Querträger an der laminierbaren Fläche endet.

Erfindungsgcmäß umfasst das Verfahren dann ferner den Schritt, die laminierbare Fläche (in der die Oberfläche des Kernschicht-Materialblocks und die Kante des Querträgers liegen) so zu laminieren, dass Harz eine Verbindung zwischen einerseits der Oberfläche des Kernschicht-Materialblocks und der Kante des Querträgers und andererseits der zu laminierenden Deckschicht herstellt. Mindestens in einem Bereich also, wo die Kante des Querträgers in der laminierbaren Fläche liegt, stellt Harz der laminierten Deckschicht eine Verbindung zwischen einerseits der Oberfläche des Kernschicht-Materialblocks und der Kante des Querträgers und andererseits der zu laminierenden Deckschicht her. Bci diesem Laminieren läuft Harz in den Zwischenraum und stellt eine Verbindung her zwischen dem Querträger und der zu laminierenden Deckschicht. So wie die Deckschicht vorzugsweise aus faserverstärktem Kunststoff laminiert werden kann, ist es auch in diesem Zwischenraum vorteilhaft, das später aushärtende Harz durch eingelagerte Fasern zu verstärken, also insbesondere faserverstärkten Kunststoff zum Beispiel dadurch herzustellen, dass in den Zwischenraum Verstärkungsfasern (zum Beispiel Rovings, Streu aus Kurzfasem oder gefaltete oder gerollte Mattenabschnitte) hinein gelegt (und/oder durch den Zwischenraum hindurch gelegt) und dann vom Harz umflossen und eingeschlossen werden.

Durch das Harz in dem Zwischenraum wird die Verbindung zwischen dem Querträger und der zu laminierenden Deckschicht der erfindungsgemäß hergestellten Sandwichplatte wesentlich großflächiger. Scherspannungen/ oder Torsionsspannungen insbesondere bei Biege- und/ oder Torsionsbelastung der Platte werden an dieser Stelle erfindungsgemäß durch einen größeren und vorzugsweise auch weniger abrupt seine Richtung ändernden Querschnitt übertragen, Dies vermindert vorteilhaft Materialspannungen und daraus möglicherweise resultierendes Versagen.

Erfindungsgemäß ist auch eine Sandwichplatte der Gestalt, die sich aus der erfindungsgemäßen Herstellung ergibt.

Erfindungsgemäß also werden Sandwichplatten (insbesondere des eingangs beispielhaft erwähnten Aufbaus mit einer leichten, formstabilen Kernschicht und tragfähigen Laminat-Außenschichten) mit zusätzlicher Biege- und Torsionsteifigkeit ausgestattet, indem in die Kernschicht mindestens ein Querträger mit einer (oder aus einer) laminierten Querträger-Schicht einlaminiert wird.

Querträger mit einer (oder aus einer) laminierten Querträger-Schicht heißt erfindungsgemäß, dass eine Platte durch Laminieren hergestellt wird und dann erfindungsgemäß in einer Sandwichplatte verarbeitet wird. Platte heißt hierbei nicht zwangsläufig, eben zu sein. Sondern der erfindungsgemäße Querträger kann auch gekrümmt und/oder gewölbt, aber auch sogar zum Beispiel zickzack- oder wellenförmig sein. Durch Laminieren im erfindungsgemäßen Sinne hergestellt sein kann eine Platte zum Beispiel, indem eine oder mehrere Glas- oder Kohlefaser-Gewebematten auf einem ebenen Untergrund (oder auf einem Untergrund entsprechend der eben angedeuteten möglichen räumlichen Gestalt) ausgelegt und mit Kunststoff wie zum Beispiel Epoxidharz durchtränkt, bestrichen und/oder übergossen werden. Nach dem Aushärten des Harzes wird die so laminierte Platte von dem Untergrund abgenommen. Dazu kann der Untergrund mit Trennmittel versehen sein, um das Abnehmen zu erleichtern. Nötigenfalls wird die Platte nun zugeschnitten. Der Querträger mit einer laminierten Querträger-Schicht kann auch selbst eine zuvor hergestellte Sandwich-Platte sein (auch dies wird in der Zeichnungsbeschreibung weiter unten detaillierter beschrieben).

Vorzugsweise wir das erfindungsgemäße Verfahren zum Herstellen einer erfindungsgemäßen Platte folgendermaßen durchgeführt: Ein Kernschicht-Materialblock wird neben einen Querträger ausgelegt. Dies geschieht mit einem Zwischenraum in einem Bereich, wo die Kante der Querträger-Schicht in der laminierbaren Fläche liegt, vorzugsweise flächenbündig. Das heißt, ein (vorzugsweise ebener) Querträger wird flächenbündig an eine (dann vorzugsweise ebene) Außenfläche (Seitenfläche, Stoßfläche) des Kernschicht-Materialblocks angelegt. Vorzugsweise an die andere Seite des Querträgers wird wieder ein Block angelegt, daran wieder ein Querträger und so weiter, zum Beispiel bis die Länger der herzustellenden Sandwichplatte erreicht ist. Diese aneinander gelegten Elemente bilden die Kernschicht der herzustellenden Sandwichplatte. Einige der Querträger sind dabei vorzugsweise so orientiert, dass die Länge, in der sie hergestellt (zum Beispiel von einer zuvor laminierten Großplatte abgeschnitten) wurden, nun als Höhe orientiert ist - also senkrecht. Die gegen diese Querträger angelegten Kernschicht-Materialblocks haben dann eine entsprechende Höhe und eine senkrechte Seitenfläche, die flächenbündig gegen den senkrecht orientierten Querträger anliegt. Andere der Querträger können dabei so orientiert sein, dass die Länge, in der sie hergestellt (zum Beispiel von einer zuvor laminierten Großplatte abgeschnitten) wurden, nun als Diagonale orientiert ist - also zum Beispiel unter 45°. Die gegen diese Querträger angelegten Kernschicht-Materialblocks sind dann entsprechend diagonal zugeschnitten und haben eine entsprechend (zum Beispiel 45°) schräge Seitenfläche, die flächenbündig gegen den senkrecht orientierten Querträger anliegt. Die Ränder dieser ausgelegten Bestandteile der Kernschicht werden vorzugsweise gerade zu einander ausgerichtet (oder, auch später zugeschnitten). Im nächsten Schritt wird nun auf eine gemeinsame Außenseite dieser bündig aneinander anschließenden Kernschicht-Bestandteile (die Außenseite aus den Oberseiten der Kernschicht-Materialblocks und den oberen Kanten der Querträger) eine Deckschicht zum Beispiel aus GfK- oder CfK-Laminat laminiert, so dass Harz der laminierten Deckschicht eine Verbindung zwischen cinerseits der Oberfläche des jeweiligen Kernschicht-Materialblocks und der Kante des Querträgers und andererseits der zu laminierenden Deckschicht herstellt. Ein Zwischenraum vorzugsweise in den Bereichen jeder Querträger-Kante, die in der laminierbaren Fläche liegt, läuft dabei mit Harz voll und stellt so jeweils im Bereich dieser Kante eine großflächigere Verbindung zwischen der Querträgerkante und der Deckschicht her, und zwar auch mit einen größeren und vorzugsweise auch weniger abrupt seine Richtung ändernden Querschnitt. Nach Trocknen dieser Deckschicht wird die Anordnung umgedreht, und das Laminieren der Deckschicht wird auf deren Unterseite wiederholt: auf die Außenseite der bündig aneinander anschließenden Kernschicht-Bestandteile (die Außenseite aus den vorherigen Unterseiten der Kernschicht-Materialblocks und den vorherigen unteren Kanten der Querträger) wird eine Deckschicht zum Beispiel aus GfK- oder CfK-Laminat laminiert, so dass Harz der laminierten Deckschicht eine Verbindung zwischen einerseits der Oberfläche des jeweiligen Kernschicht-Materialblocks und der Kante des Querträgers und andererseits der zu laminierenden Deckschicht herstellt.

Es ist zwar wegen der geometrischen Übersichtlichkeit und Einfachheit und der daraus resultierenden wirtschaftlichen Herstellbarkeit (auch wegen des relativ größeren Bedarfs an ebenen Sandwichplatten) besonders bevorzugt, aus quaderförmigem Kernschicht-Materialblock-Material (oder zumindest mit ebener, planparalleler Ober- und Unterseite) eine ebene Sandwichplatte mit einer ober- und einer unterseitigen Deckschicht herzustellen. Aber auch alle anderen räumlichen Ausgestaltungen mit gekrümmten und/oder gewölbten Elementen mit den Merkmalen eines der beiden unabhängigen Ansprüche sind erfindungsgemäß möglich.

Diese und andere Merkmale und Vorteile der vorliegenden Erfindung werden anhand von Ausführungsbeispielen in den beigefügten Abbildungen weiter erläutert.
Figur 1 zeigt räumlich schematisch das erfindungsgemäße Herstellen einer crfindungsgemäßen Sandwichplatte in drei Stadien,
Figur 2 zeigt räumlich schematisch eine Alternative zu Figur 1 in fünf Stadien,
Figur 3 zeigt eine Seitenansicht von vier verschiedenen erfindungsgemäßen Sandwichplatten und
Figur 4 zeig räumlich schematisch das Zuschneiden von erfindungsgemäßen Querträgern aus einer zuvor laminierten Platte.

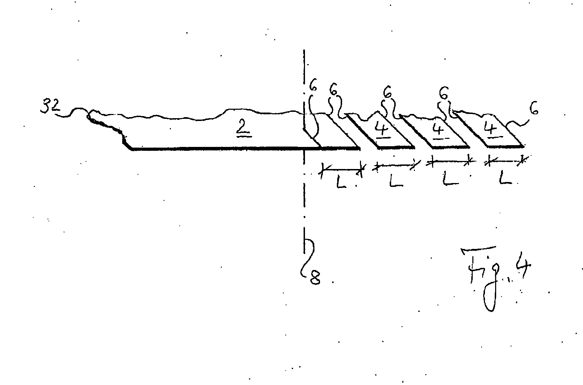

Zunächst mit Blick auf Figur 4 ist erkennbar, wie aus einer zuvor laminierten Platte 2 Querträger 4 abgeschnitten werden. Die Querträger 4 werden in einer Länge L von der Platte abgeschnitten. Das heißt mit anderen Worten, die parallelen Schnittkanten 6 der Querträger 4 haben den Abstand L voneinander. Geschnitten werden die Querträger 4 zum Beispiel mittels einer Bandsäge oder einer Kreissäge*)*. Das Sägewerkzeug ist in Figur 4 nur schematisch durch eine strichpunktierte Linie 8 angedeutet.

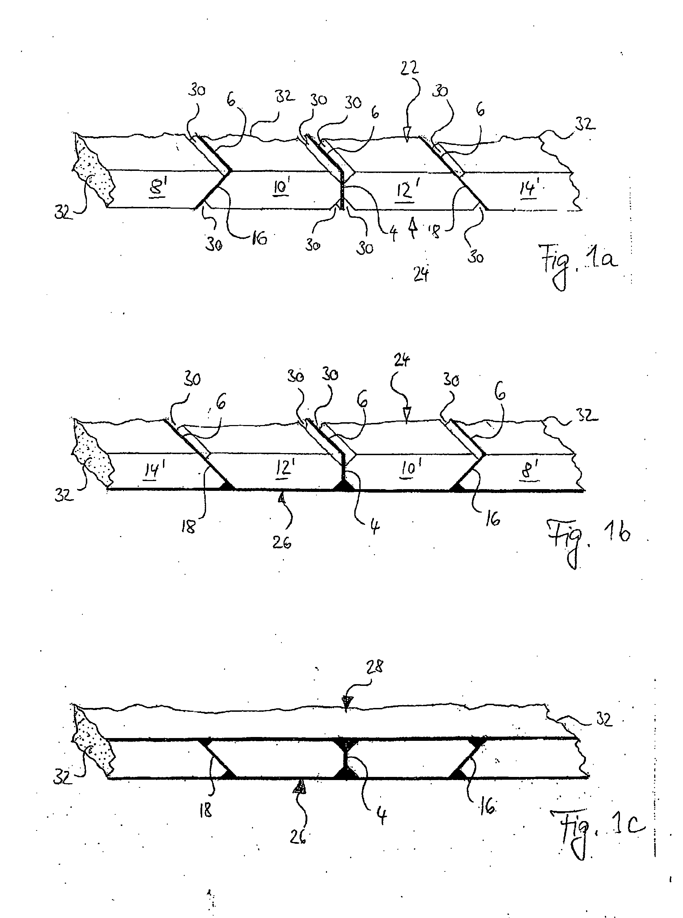

Figur 1a zeigt vier Kernschicht-Materialblocks 8, 10, 12, 14, die im Wechsel mit jeweils einem Querträger 16, 4, 18 als Kernschicht einer herzustellenden Sandwichplatte 20 (Figur 1c) bündig aneinander angeordnet sind.

Die Kernschicht-Materialblocks haben jeweils eine Oberseite 22 und eine Unterseite 24, die parallel zueinander sind. Die Querträger 4, 16 und 18 sind eben. Sie sind (mit ihrer jeweiligen Ober- bzw. Unterseite) flächenbündig an eine jeweilige ebene Außenfläche eines der Materialblocks flächenbündig angelegt. Der Querträger 4 ist so orientiert, dass seine Länge L, in der er von der zuvor laminierten Großplatte 2 gemäß Figur 4 abgeschnitten worden war, nun als Höhe orientiert ist - also in Figur 1a senkrecht. Die ausgelegten Materialblocks 8, 10, 12, 14 haben eine entsprechende Höhe, also einen Abstand L ihrer Oberseite 22 von ihrer dazu planparallelen Unterseite 24. Die Querträger 16 und 18 sind wie erkennbar diagonal unter 45° zur Oberseite 22 und Unterseite 24 orientiert. Diese beiden Querträger 16 und 18 haben eine größere Länge (L mal der Quadratwurzel aus 2), so dass ihre jeweilige obere Kante 6 mit der Oberseite der Materialblocks und ihre jeweilige untere Kante mit der Unterseite der Materialblocks eine ebene, gemeinsam laminierbare Fläche bilden.

Im nächsten Schritt wird nun auf die gemeinsam laminierbare Fläche auf der Oberseite 22 dieser bündig aneinanderliegenden Kernschicht-Bestandteile 8, 16, 10, 4, 12, 18, 14 eine Deckschicht 26 (Figur 1b) laminiert. Nach Trocknen dieser Deckschicht 26 wird die Anordnung umgedreht. Es ergibt sich dann die Anordnung gemäß Figur 1b. Erkennbar ist nun die vorherige Unterseite 24 als ebene, gemeinsam laminierbare Fläche 24 - (nun) an der Oberseite der so angeordneten Kernschicht-Elemente (von links nach rechts 14, 18, 12, 4, 10, 16, 8). Auch diese ebene, zu laminierende Fläche 24 wird nun mit einer Deckschicht 28 (Figur 1c) laminiert und trocknen gelassen. So entsteht die fertige Sandwichplatte 20 gemäß Figur 1c.

Erkennbar insbesondere in Figur 1c hat das Laminieren der beiden Deckschichten 26, 28 so stattgefunden, dass Harz der laminierten Deckschicht eine Verbindung zwischen einerseits der laminierten Deckschicht 26, 28 und andererseits den Oberflächen des jeweiligen Kernschicht-Materialblocks (auf deren beiden Seiten 22 und 24) herstellt - und dass das Harz außerdem auch eine Verbindung zwischen einerseits der laminierten Deckschicht 26, 28 und andererseits den Kanten 6 der Querträger 16, 4, 18 herstellt. Um dies erfindungsgemäß zu ermöglichen, liegen die Kanten 6 der Querträger 16, 4, 18 in einer Fläche - hier sogar in einer Ebene - mit Außenseiten der Kernschicht-Materialblocks (hier an deren einer Seite 22 und der planparallel dazu liegenden anderen Seite 24). So bilden zum Beispiel gemäß Figur 1a die Oberseiten 22 der Kernschicht-Materialbloclcs 8, 10, 12, 14 zusammen mit den oberen Kanten 6 der Querträger 16, 4, 18 wie schon gesagt eine gemeinsam laminierbare Fläche für die zu laminierende Deckschicht (die nach dem Umdrehen gemäß Figur 1b auf der Unterseite die Bezugsziffer 26 hat).

Die Verbindung zwischen den Kanten 6 der Querträger 16, 4, 18 und den jeweiligen laminierten Flächen 26, 28 entsteht dadurch, dass beim Laminieren der Deckschichten das Harz mit der Kante eine Verbindung eingeht. Dazu ist es besonders vorteilhaft, wenn die Querträger aus demselben Laminat hergestellt wurden wie nun die Deckschichten. Zumindest die Verwendung desselben Harzes ist vorteilhaft, wenn Querträger und Deckschicht zum Beispiel aus faserverstärktem Kunststoff (GFK oder CFK; Epoxid oder Polyester) hergestellt werden.

Zwischenräume 30 überall dort, wo der jeweilige Querträger an den zu laminierenden Flächen (hier Ober- und Unterseite der in Figur 1a dargestellten Anordnung) endet, laufen beim Laminieren der jeweiligen Deckschicht 26, 28 mit Harz voll und stellen so jeweils im Bereich dieser Kante eine großflächigere Verbindung zwischen der Querträgerkante 6 und der Deckschicht 26 oder 28 her, und zwar auch mit einen größeren und vorzugsweise auch weniger abrupt seine Richtung ändernden Querschnitt.. In Figur 1 ist betreffend diese Zwischenräume erkennbar, dass jeder der Materialblocks 8', 10', 12' und 14' entlang den Kanten 6 der jeweiligen Querträger 16, 4 und 18 eine Fase von 45° zur Senkrechten aufweist - also allgemein gesprochen einen Bereich, wo von dem Materialblock Materialvolumen entfernt wurde, damit sich der Zwischenraum 30 ausbildet.

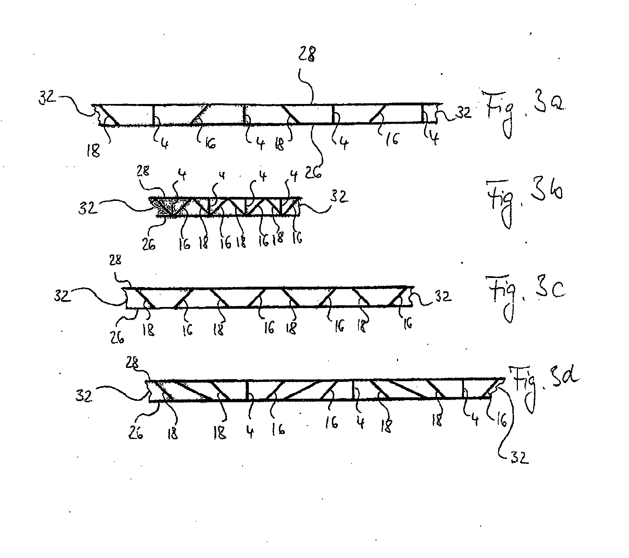

Wie soweit zu Figur 1 beschrieben entsteht eine Sandwich-Platte, die in ihrer Seitenansicht nochmals in Figur 3a abgebildet ist (in Figur 3 überhaupt ohne Abbildung der "vollgelaufenen" Zwischenräume 30). Die Sandwichplatte 20 hat nämlich zwei planparallele Deckschichten 26, 28 sowie in gleichmäßigem Abstand von links nach rechts die beiden Deckschichten verbindende Querträger: senkrechte Querträger 4, zwischen denen sich unter 45° diagonal verlaufende Querträger finden, von denen abwechselnd ein Querträger 16 abfallend unter 45° nach links und ein Querträger 18 abfallend unter 45° nach rechts orientiert ist. Die Querträger 18, 4, 16, 4, 18, 4, 16, 4 usw. sind dabei soweit voneinander beabstandet, dass sie einander nicht berühren. Dies ist anders in einer alternativen Ausgestaltung einer Sandwichplatte gemäß Figur 3b: hier treffen sich immer ein diagonal nach rechts abfallender Querträger 18, ein senkrechter Querträger 4 und ein diagonal nach links abfallender Querträger 16 mit ihrer unteren Kante an der unteren Deckschicht 26, und an der oberen Decksicht 28 treffen sich (ebenfalls von links nach rechts) einer der Querträger 18 und einer der Querträger 16.

Figur 3c ist noch eine alternative Ausgestaltung einer Sandwichplatte, bei der keine senkrechten Querträger 4, sondern nur in die beiden Richtungen unter 45° diagonal orientierte Querträger 16, 18 Einsatz finden. Figur 3d zeigt schließlich eine Seitenansicht einer Sandwichplatte mit nicht nur senkrecht und unter 45°, sondern auch noch unter einem anderen Winkel orientierten Querträger. Insgesamt soll Figur 3 andeuten, dass Abstand und Orientierung der Querträger in der erfindungsgemäßen Sandwichplatte beliebig gestaltet sein können.

Der erfindungsgemäße Zwischenraum kann zwar auch einfach dadurch ausgebildet werden, dass ein Querträger und ein Kernschicht-Materialblock nicht unmittelbar bündig aneinandergelegt werden (nicht dargestellt). Bevorzugt ist aber ein bereichsweise bündiges Aneinanderliegen, wie es in Figur 1 dargestellt ist, und ein Zwischenraum 30 nur dort, wo eine Kante 6 eines Querträgers 16, 4, 18 in der laminierbaren Fläche 22 oder 24 liegt.

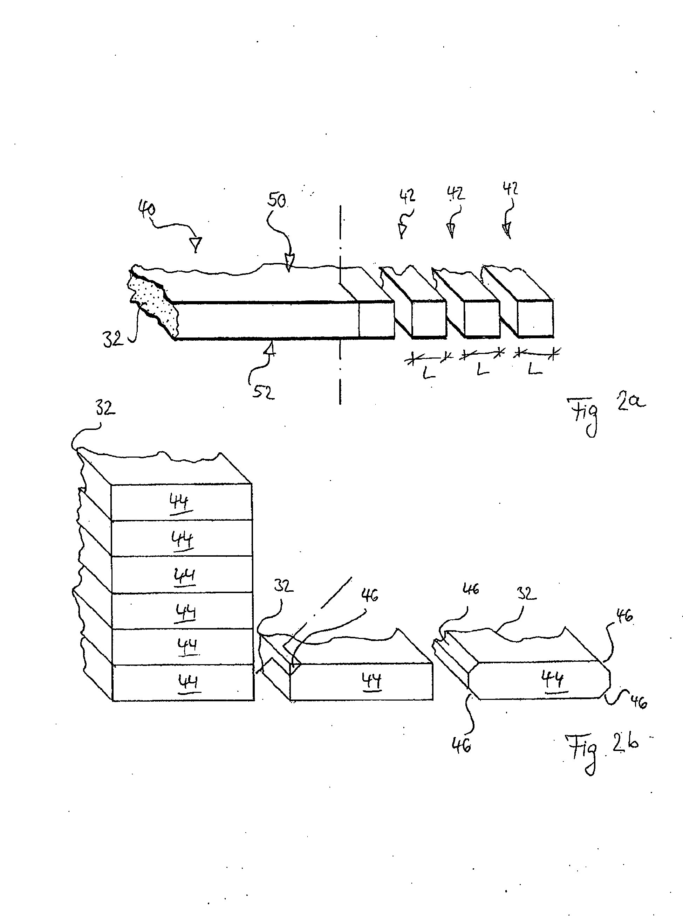

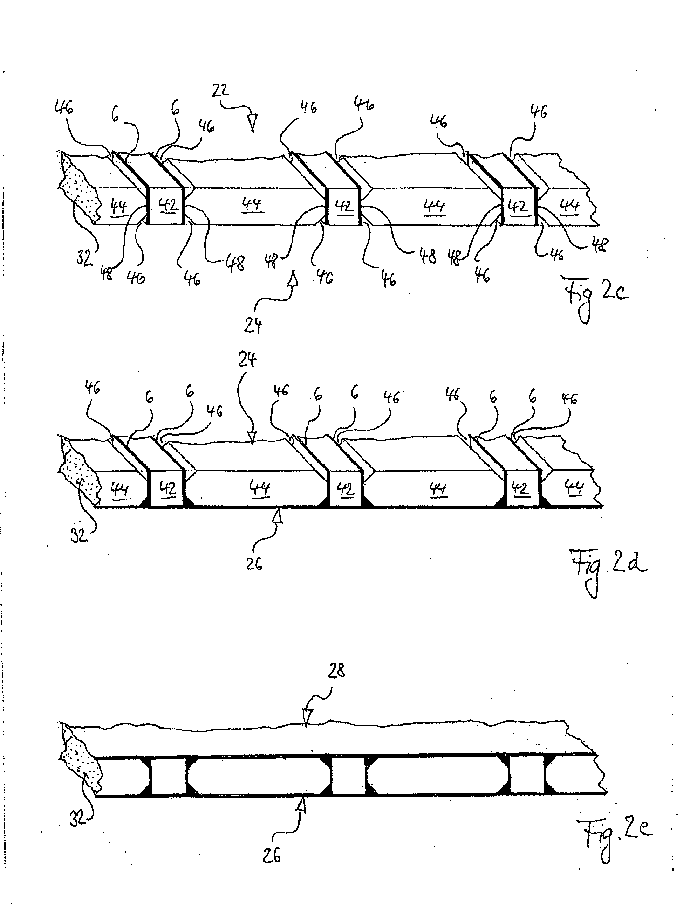

Alternativ zu den soweit beschriebenen Querträgern 16, 4, 18, die aus einer zuvor laminierten Platte 2 hergestellt sind, kann eine Querverstrebung erfindungsgemäß auch durch Querträger 42 verwirklicht werden, die aus Abschnitten 42 einer vorgefertigten Querträger-Sandwichplatte 40 hergestellt sind. Dazu wird gemäß Figur 2 zunächst von einer vorgefertigten Sandwichplatte 40 eine Reihe von Querträger-Sandwichplatten 42 abgeschnitten (Figur 2a). Von quaderförmigen Kemschicht-Materialblecks 44 wird entlang von vier parallelen Kanten Malerialvolumen abgetragen, indem dort jeweils eine Fase 46 von 45° abgeschnitten wird. Die gemäß Figur 2a abgeschnittenen und gemäß Figur 2b mit Fasen versehenen Querträger-Sandwichplatten 42 werden nun gemäß Figur 2c so orientiert, dass die Länge L, in der sie (gemäß Figur 2a) abgeschnitten wurden, nun (in Figur 2c) als Höhe orientiert ist - also senkrecht. Diese so orientierten Querträger-Sandwichplatten 42 werden gemäß Figur 5c im Wechsel mit den (mit ihren vier Phasen 46 versehenen) Materialblocks 44 ausgelegt - und zwar mit ihren senkrechten Stoßflächen 48 bündig aneinanderstoßend. Das Laminieren der beiden Schichten 26, 28 erfolgt nun wie zu Figur 1 beschrieben erst auf der einen Seite 22 mit dem Ergebnis gemäß Figur 1d und dann auf der anderen Seite 24 mit dem Ergebnis gemäß Figur 1e. Dabei laufen die Zwischenräume 46, die aufgrund der Phasen 46 dort entstehen, wo die Kanten 6 der Querträgerschichten an die Deckschichten 26, 28 stoßen, mit Harz voll. Die Querträger-Schichten sind in dieser Ausfuhrungsform die laminierten Deckschichten 50, 52 der vorgefertigten Sandwichplatte 40.

Angemerkt sei noch, dass in allen Figuren 1 bis 4 Bruchkanten 32 andeuten, dass das jeweils dargestellte Element sich in diese Richtung weitererstreckt. Auch sei angemerkt, dass gleich nummerierte Elemente in den Figuren die gleiche Gestalt haben.

## Patentansprüche

1. Verfahren zum Herstellen einer Sandwichplatte aus
- mindestens einer zu laminierenden Deckschicht und
- mindestens einem Kernschicht-Materialblock und
- mindestens einem Querträger mit einer laminierten Querträger-Schicht,
mit dem Schritt:
• Anordnen eines Kernschicht-Materialblocks und eines Querträgers so,
- dass eine Oberfläche des Kernschicht-Materialblocks und eine Kante des Querträgers eine gemeinsam laminierbare Fläche für die zu laminierende Deckschicht bilden und
- dass die Querträger-Schicht in einem Winkel zu der laminierbaren Fläche liegt,
**dadurch gekennzeichnet, dass** das Anordnen so erfolgt,
- dass mindestens in einem Bereich, wo die Kante der Querträger-Schicht in der laminierbaren Fläche liegt, ein Zwischenraum zwischen dem Kernschicht-Materialblock und der Querträger-Schicht bleibt,
und durch den nachfolgenden Schritt:
• Laminieren der laminierbaren Fläche so, dass Harz in dem Zwischenraum eine Verbindung zwischen der Querträger-Schicht und der zu laminierenden Deckschicht herstellt.

2. Verfahren nach dem vorhergehenden Anspruch, **dadurch gekennzeichnet, dass** die laminierte Querträger-Schicht die auf eine Kernschicht laminierte Deckschicht (Querträger-Deckschicht) einer Querträger-Sandwichplatte ist und dass das Anordnen so erfolgt, dass die Oberfläche des Kernschicht-Materialblocks mit einer Oberfläche der Querträger-Sandwichplatte, die die Kante enthält, die gemeinsam laminierbare Fläche für die zu laminierende Deckschicht bildet.

3. Verfahren nach einem der vorhergehenden Ansprüche, **dadurch gekennzeichnet, dass** in dem Bereich des Kernschicht-Materialblocks, wo durch das Anordnen die Querträger-Schicht an der zu laminierenden Fläche endet, in einem zeitlich früheren Schritt Materialvolumen entfernt wird, und dass in dem Bereich des entfernten Materialvolumens mindestens ein Teil des Zwischenraums ausgebildet wird.

4. Verfahren nach dem vorhergehenden Anspruch, **dadurch gekennzeichnet, dass** das Materialvolumen entlang einer Kante des Kernschicht-Materialblocks insbesondere in Gestalt einer Fase von 30° bis 60°, insbesondere 45°, entfernt wird.

5. Verfahren nach einem der vorhergehenden Ansprüche, **dadurch gekennzeichnet, dass** die Querträger-Schicht zu der zu laminierenden Fläche dort, wo die Querträger-Schicht an der zu laminierenden Fläche endet, einen Winkel von 45° bis 90°, insbesondere von 45° oder 90° +/-5°, bildet.

6. Verfahren nach einem der vorhergehenden Ansprüche, **dadurch gekennzeichnet, dass** die Querträger-Schicht von der Deckschicht der Querträger-Sandwichplatte gebildet wird und zu der zu laminierenden Fläche dort, wo die Querträger-Sandwichplatte an der zu laminierenden Fläche endet, einen Winkel von 90° bildet.

7. Verfahren nach einem der vorhergehenden Ansprüche, **gekennzeichnet durch** den Schritt zeitlich vor dem Anordnen, dass die Querträger-Sandwichplatte als Abschnitt von einer vorgefertigten Platte abgeschnitten wird.

8. Verfahren nach einem der vorhergehenden Ansprüche, **dadurch gekennzeichnet, dass** vor dem Laminieren der laminierbaren Fläche in dem Zwischenraum Verstärkungsfasern angeordnet werden.

9. Sandwichplatte aus
- mindestens einer laminierten Deckschicht und
- mindestens einem Kernschicht-Materialblock und
- mindestens einem Querträger aus mindestens einer laminierten Querträger-Schicht, wobei:
- die laminierte Deckschicht auf einer gemeinsam laminierbaren Fläche laminiert ist, die von einer Oberfläche des Kernschicht-Materialblocks und einer Kante der Querträger-Schicht gebildet ist, und
- die Querträger-Schicht in einem Winkel zu der laminierten Deckschicht liegt,
**dadurch gekennzeichnet,**
**dass** mindestens in einem Bereich, wo die Kante der Querträger-Schicht in der laminierbaren Fläche liegt, in einem Zwischenraum zwischen dem Kernschicht-Materialblock und der Querträger-Schicht Harz der laminierten Deckschicht eine Verbindung zwischen der Querträger-Schicht und der laminierten Deckschicht herstellt.

10. Sandwichplatte nach dem vorhergehenden Anspruch, **dadurch gekennzeichnet, dass** die laminierte Querträger-Schicht die auf eine Kernschicht laminierte Deckschicht (Querträger-Deckschicht) einer Querträger-Sandwichplatte ist, wobei die gemeinsam laminierbare Fläche, auf der die laminierte Deckschicht laminiert ist, von der Oberfläche des Kernschicht-Materialbloeks und einer Oberfläche der Querträger-Sandwichplatte gebildet ist, die die Kante enthält.

11. Sandwichplatte nach dem vorhergehenden Anspruch, **dadurch gekennzeichnet, dass** in dem Bereich des Kernschicht-Materialblocks, wo die Querträger-Sandwichplatte an der zu laminierenden Fläche endet, der Materialblock eine Abtragung aufweist, und dass in dem Bereich der Abtragung mindestens ein Teil des Zwischenraums ausgebildet ist.

12. Sandwichplatte nach dem vorhergehenden Anspruch, **dadurch gekennzeichnet, dass** die Abtragung entlang einer Kante des Kernschicht-Materialblocks angeordnet ist, insbesondere in Gestalt einer Fase von 30° bis 60°, insbesondere 45°.

13. Sandwichplatte nach einem der vorhergehenden Ansprüche, **dadurch gekennzeichnet, dass** die Deckschicht der Querträger-Sandwichplatte zu der laminierten Fläche dort, wo die Querträger-Sandwichplatte an der zu laminierenden Fläche endet, einen Winkel von 45° bis 90°, insbesondere 90°, bildet.

14. Sandwichplatte nach einem der vorhergehenden Ansprüche, **dadurch gekennzeichnet, dass** die Querträger-Sandwichplatte ein Abschnitt einer vorgefertigten Platte ist.

15. Sandwichplatte nach einem der vorhergehenden Ansprüche, **dadurch gekennzeichnet, dass** in das IIarz in dem Zwischenraum Verstärkungsfasern eingelagert sind.
